# DEMANDE DE BREVET EUROPEEN

(11) **EP 1 531 125 A1**
(43) Date de publication de la demande: **18.05.2005**
(21) Numéro de dépôt: 03447274.6
(22) Date de dépôt: 17.11.2003
(51) Int. Cl.: B63H 23/24, B63H 21/20, B60K 6/04

(54) **Installation de propulsion navale hybride et plurifonctionnelle**

(71) Demandeur: Technovoile S.A., 4000 Liege (BE)
(72) Inventeur: Baudry, Philippe, 1410 Waterloo (BE)

(57) **Abrégé**

La présente invention se rapporte à une installation de propulsion navale, caractérisée en ce qu'elle comporte un moteur thermique 29 facultatif et une ou des piles à combustible 1 alimentée(s) en carburant via au moins une des trois sources suivantes : un réservoir général de carburant 3 qui, en débitant à travers un système de reformage 5, fournit de l'hydrogène ; un électrolyseur 7 qui fournit directement la pile 1 en hydrogène et un réservoir d'hydrogène 9 qui peut être rempli grâce à l'électrolyseur 7 lequel fournit alors indirectement la pile 1 en hydrogène.

## Description

### Objet de l'invention

La présente invention concerne une installation de propulsion navale destinée, notamment, à des navires plurifonctionnels.

Elle s'applique en particulier à des navires qui, grâce à l'équipement mis en oeuvre, en recourant à différentes sources énergétiques, tant pour la propulsion que pour d'autres fonctions. Le navire est de plus prévu pour pouvoir opérer de manière plurifonctionnelle pour le transport de passagers et/ou de fret, tant océanique que fluvial.

### Etat de la technique

La propulsion pluri-énergétique de navires est souvent adoptée notamment pour permettre, pour la croisière par exemple, d'assurer une propulsion à l'aide d'une voilure et, dans certaines circonstances particulières, une propulsion motorisée, en particulier à l'aide de moteurs diesel ou autres. La voilure de propulsion doit bien entendu s'entendre au sens large comme incluant des systèmes éoliens, des turbovoiles et systèmes similaires.

De nombreux perfectionnements ont été apportés tant aux voilures qu'aux moteurs.

Des raisons bien connues militent cependant pour l'utilisation aussi large que possible des énergies renouvelables, au premier plan desquelles figurent bien entendu, en particulier en mer, tout d'abord l'énergie éolienne mais aussi, au moins localement, l'énergie solaire.

D'autres sources d'énergie telles que la biomasse peuvent également entrer en ligne de compte dans certaines circonstances.

L'utilisation optimale de ces sources d'énergie n'est cependant pas toujours possible, notamment dans la durée, par suite des difficultés de stockage de celles-ci et à cause de leur disponibilité réduite par rapport à la puissance totale nécessaire.

En fait, ces types d'énergie ne sont pas à elles-seules capables de satisfaire normalement, de manière permanente, aux nécessités de propulsion et un apport ou appoint extérieur d'une source énergétique classique est souvent nécessaire.

La coordination et l'intégration des approvisionnements énergétiques d'une part, et la consommation énergétique représentée par l'alimentation des moteurs et d'éventuelles autres installations consommatrices d'autre part, sont donc nécessaires. Ceci doit, de plus, se réaliser selon un schéma opératoire compatible avec un rendement optimalisé, un coût abordable des installations et une fiabilité maximale. Le dispositif proposé doit de plus être adapté au milieu marin ou fluvial, à la plurifonctionnalité du navire.

### Buts de l'invention

Le but essentiel de l'invention est de proposer une solution répondant aux exigences et conditions précitées en terme d'une installation permettant d'abord une propulsion navale et, éventuellement, d'autres approvisionnements énergétiques répondant aux exigences indiquées ci-dessus.

L'invention vise également à inclure dans une installation des équipements complémentaires qui optimalisent ladite installation.

### Eléments caractéristiques de l'invention

Le concept central sur lequel repose l'invention est celui de l'utilisation d'une pile à combustible (dans le descriptif qui suit, il sera fait référence à une pile à combustible mais il doit être bien entendu que cette terminologie couvre aussi bien une batterie constituée par plusieurs piles).

Tenant compte de l'environnement dans lequel une telle pile est incorporée dans une installation fonctionnelle embarquée sur un navire, et des exigences en termes de fiabilité et capacité énergétique, une pile fonctionnant à haute température, c'est-à-dire à une température supérieure à 100°C (sans considérer les pertes de chaleur) s'est révélée la plus adéquate : ainsi une pile pourra fournir aussi bien de l'énergie électrique que thermique, évitant donc d'embarquer des systèmes de chauffage et d'air conditionné conventionnels.

Différents autres éléments caractéristiques seront explicités plus en détail dans les revendications et dans l'exposé détaillé qui suit d'une forme d'exécution préférée de l'invention

### Brève description du schéma annexé

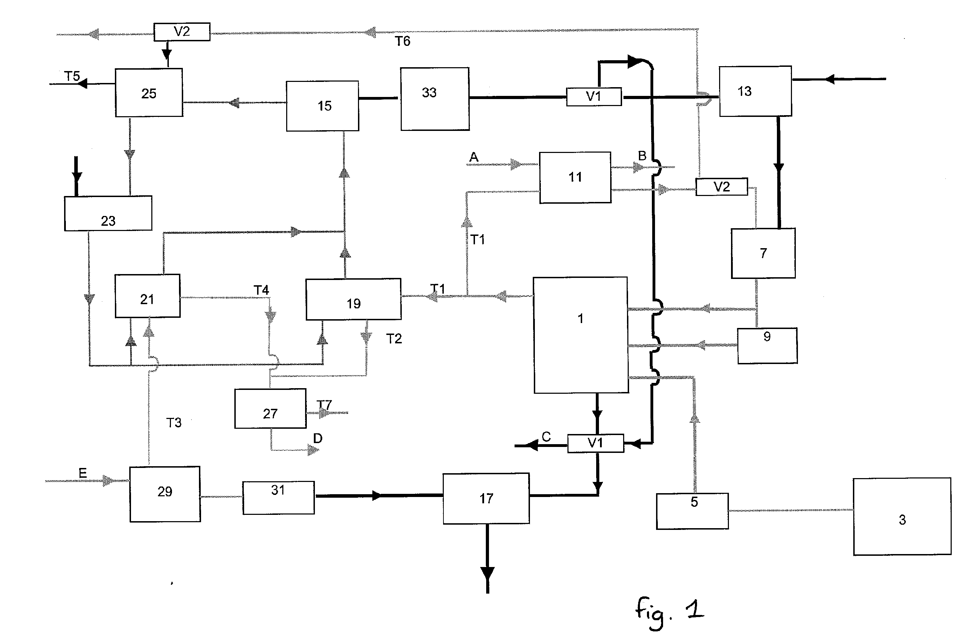

La figure schématique annexée décrit une installation destinée à illustrer, sans caractère limitatif, une forme d'exécution préférentielle de l'invention.

Par rapport à l'unité centrale de la pile à combustible, les flux tant énergétiques, notamment électriques, que les flux de matières (fluides) sont représentés par des lignes, pourvues de flèches indiquant le sens de circulation, reliant les blocs d'équipement.

Les lignes en trait gras continu représentent l'alimentation électrique, ceux en traits simples l'eau du circuit hydraulique principal et les autres lignes en traits grisés, des circulations de gaz secs chauds, à savoir l'hydrogène des gaz de combustion, de vapeur d'eau ou d'autres fluides ainsi qu'il sera indiqué dans la description qui suit.

Dans le schéma, les indications T1 à T7 se réfèrent aux températures des fluides circulants (eau liquide ou vapeur).

V₁ désigne des commutations unidirectionnelles ou multidirectionnelles pour l'électricité et V₂ désigne des vannes unidirectionnelles ou multidirectionnelles pour les fluides.

### Description d'une forme d'exécution préférée de l'invention

L'installation représentée comporte un moteur thermique 29 et au moins une pile à combustible 1. Celle-ci peut être alimentée en carburant via au moins une des trois sources suivantes : un réservoir général de carburant 3 qui, en débitant à travers un système de reformage 5, fournit de l'hydrogène ; un électrolyseur 7 qui peut fournir directement la pile 1 en hydrogène et, enfin, un réservoir d'hydrogène 9 lequel peut être rempli grâce à l'électrolyseur 7 qui fournit alors indirectement la pile 1 en hydrogène. Le terme réservoir à hydrogène s'applique bien entendu à tout système de stockage, notamment par adsorption ou absorption.

L'électrolyseur 7 est alimenté en eau par une unité de dessalinisateur/purificateur/déminéralisateur 11 et en électricité par une batterie 13. Celle-ci peut être chargée par des énergies dites renouvelables ou « vertes » (énergie éolienne, solaire ou biomasse ...) et/ou par une unité expenseur/turbine à vapeur 15 via un alternateur 33.

L'électrolyseur 7 produit ainsi de l'hydrogène qui pourra être utilisé instantanément dans la pile à combustible 1 ou être stocké dans le réservoir à hydrogène 9. Le système de reformage 5 peut être interne ou externe à la pile 1 et est destiné à produire un gaz essentiellement composé d'hydrogène et dénué de particules nocives au bon fonctionnement de la pile 1 pour alimenter cette pile 1 en carburant approprié.

La première fonction de production de la pile 1 alimentée comme exposé ci-avant est la production de l'électricité qui fait fonctionner un moteur électrique 17, générateur de l'énergie propulsive et/ou qui alimente les installations du navire. A titre complémentaire, elle produit des gaz chauds à la température T1 que l'on peut utiliser pour diverses applications. Une partie des gaz récupérés à température T1 peut alimenter l'unité de dessalinisateur/purificateur /déminéralisateur 11 pour produire, sous l'effet de la chaleur, à partir de l'eau alimentée en A, de l'eau purifiée et dessalinisée. Cette eau prélevée à l'extérieur est, selon les circonstances, de l'eau douce ou salée et l'installation 11 est équipée en conséquence, en alimentant ainsi l'électrolyseur 7 et/ou l'alimentation en eau douce du bord et les autres applications du bord nécessitant de l'eau pure (par exemple : le condenseur 25 décrit ci-après) ainsi qu'en filtrant des impuretés (sels et autres résidus) qui peuvent être retraitées ou rejetées en B.

Une autre partie des gaz à la température T1 provenant de la pile 1 peut être utilisée pour alimenter un premier échangeur de chaleur 19. Dans celui-ci, l'eau d'un circuit hydraulique principal, provenant d'un compresseur électrique 23, est évaporée grâce au transfert de chaleur entre les gaz de la pile et cette eau.

La vapeur d'eau obtenue provenant du premier échangeur de chaleur 19 toujours sous pression après le changement de phase, est envoyée vers la turbine à vapeur/expenseur 15 en créant de l'électricité via l'alternateur 33 qui sera stockée dans la batterie 13 et/ou utilisée pour le moteur électrique 17 et l'alimentation électrique du bord C.

La vapeur sort de la turbine 15 à une pression réduite mais à une température la maintenant sous forme gazeuse. On fait passer cette vapeur d'eau dans un condenseur 25 où elle peut échanger de la chaleur avec de l'eau, circulant dans un second circuit hydraulique possédant une température inférieure ; le résultat sera un échauffement de l'eau de refroidissement alimentée, laquelle pourra être utilisée pour l'utilisation du bord et des passagers et une condensation de l'eau du circuit principal. Cette eau passe alors dans un compresseur 23 alimenté en électricité qui va augmenter la pression du liquide, après quoi ce liquide recommence le même cycle en formant ainsi, un cycle de Rankine pour la récupération de la chaleur en provenance de la pile 1.

Les gaz d'échappement de la pile 1 sont moins chauds (T2) après le passage dans le premier échangeur de chaleur 19 et peuvent être évacués vers une pompe à chaleur 27 qui va générer le système d'air conditionné D et/ou d'eau sanitaire. En sortie de la pompe 27, les gaz à température T7 peuvent finalement être dirigés vers des cheminées.

Un ou généralement plusieurs moteurs diesel 29 alimentés en E qui entraînent des génératrices-alternatrices 31 fournissant l'électricité au moteur électrique 17. Les gaz d'échappement des moteurs 29 à température T3 peuvent être récupérés pour être utilisés dans un système avec un second échangeur de chaleur 21 identique à celui introduit pour collecter les gaz provenant de la pile à combustible 1 ou être intégrés dans le même circuit hydraulique que celui de la pile mais fonctionnant alors via un évaporateur différent de celui utilisé pour les gaz en provenance de la pile 1.

Les gaz produits à la température T4 à la sortie du second échangeur de chaleur 21 peuvent être également fournis à la pompe à chaleur 27.

On obtient ainsi un système de cogénération à partir de la pile 1 et du ou des moteurs diesels 29 qui produit aussi bien l'électricité nécessaire à la propulsion et à l'alimentation du bord, que l'électricité et l'eau nécessaires au fonctionnement de l'électrolyseur 7 (source secondaire de carburant de la pile 1), l'eau chaude utilisée à bord par les passagers et l'air conditionné de bord.

Il doit être bien entendu que si les éléments décrits en référence au schéma bloc sont identifiés dans le texte ci-dessus comme une unité unique, il peut bien entendu s'agir de plusieurs unités individuelles exerçant la même fonction qui sont montées en batterie opérationnelle.

De plus, l'illustration d'une forme d'exécution préférée telle que décrite n'implique pas que tous les éléments complémentaires indiqués sont nécessairement présents ou opérationnels dans tous les cas.

### Légende

1. Pile à combustible
3. Réservoir général de carburant
5. Reformage
7. Electrolyseur
9. Réservoir d'hydrogène
11. Unité de dessalinisateur / purificateur / déminéralisateur
13. Batterie
15. Expenseur/Turbine à vapeur
17. Moteur électrique
19. Echangeur de chaleur
21. Echangeur de chaleur
23. Pompe pour l'eau du circuit hydraulique principal
25. Condenseur
27. Pompe à chaleur
29. Moteur (diesel)
31. Génératrice
33. Alternateur
   A. Alimentation en eau (saline ou douce)
   B. Impuretés et sels résiduels
   C. Electricité de bord
   D. Air conditionné
   V₁ Système de distribution électrique unidirectionnelle ou pluridirectionnelle (ET/OU)
   V₂ Système de vanne unidirectionnelle ou pluridirectionnelle (ET/OU)

## Revendications

1. Installation de propulsion navale, **caractérisée en ce qu'**elle comporte un moteur thermique (29) facultatif et au moins une pile à combustible (1) alimentée en carburant via au moins une des trois sources suivantes : un réservoir général de carburant (3) qui, en débitant à travers un système de reformage (5), fournit de l'hydrogène ; un électrolyseur (7) qui fournit directement la pile (1) en hydrogène et un réservoir d'hydrogène (9) qui peut être rempli grâce à l'électrolyseur (7) lequel fournit alors indirectement la pile (1) en hydrogène.

2. Installation selon la revendication 1, **caractérisée en ce que** l'électrolyseur (7) est alimenté en eau par une unité de dessalinisateur/purificateur/déminéralisateur (11) et en électricité par une batterie (13).

3. Installation selon la revendication 2, **caractérisée en ce que** la batterie (13) est chargée par des énergies dites renouvelables et/ou par une unité expenseur/turbine à vapeur (15) et alternateur (33).

4. Installation selon l'une quelconque des revendications 2 ou 3, **caractérisée en ce que** l'électrolyseur (7) produit de l'hydrogène qui est utilisée instantanément dans la pile à combustible (1) ou est stocké dans le réservoir à hydrogène (9).

5. Installation selon l'une quelconque des revendications 1 à 4, **caractérisée en ce que** le système de reformage (5) est interne ou externe à la pile (1) et est destiné à produire un gaz essentiellement composé d'hydrogène et dénué de particules nocives au bon fonctionnement de la pile (1).

6. Installation selon l'une quelconque des revendications 1 à 5, **caractérisée en ce que** la pile (1) sert à la production de l'électricité qui fait fonctionner un moteur électrique (17), générateur de l'énergie propulsive et/ou alimentant les installations électriques du navire.

7. Installation selon l'une quelconque des revendications 2 à 6, **caractérisée en ce que** les gaz chauds produits par la pile (1) alimentent l'unité de dessalinisateur/purificateur/déminéralisateur (11) en produisant de l'eau purifiée et dessalinisée.

8. Installation selon la revendication 7, **caractérisée en ce que** l'eau purifiée et dessalinisée sert à alimenter l'électrolyseur (7) et/ou d'autres applications du bord nécessitant de l'eau pure.

9. Installation selon la revendication 7 ou 8, **caractérisée en ce qu'**une partie des gaz chauds de la pile (1) est utilisée pour alimenter un premier échangeur de chaleur (19).

10. Installation selon la revendication 9, **caractérisée en ce que** dans le premier échangeur de chaleur (19), de l'eau d'un circuit hydraulique principal provenant d'une pompe électrique (23) est évaporée grâce au transfert de chaleur entre les gaz de la pile (1) et cette eau.

11. Installation selon la revendication 9 ou 10, **caractérisée en ce que** la vapeur d'eau obtenue provenant du premier échangeur de chaleur (19), sous pression après changement de phase, est envoyée vers la turbine à vapeur/expenseur (15) en créant de l'électricité via l'alternateur (33) qui est stockée dans la batterie (13) et/ou utilisée pour le moteur électrique (17) et l'alimentation électrique du bord (C).

12. Installation selon la revendication 11, **caractérisée en ce que** la vapeur sortant de la turbine (15) à une pression réduite mais à une température la maintenant sous forme gazeuse, passe dans un condenseur (25) où elle échange de la chaleur avec de l'eau circulant dans un second circuit hydraulique possédant une température inférieure en provoquant un échauffement de l'eau de refroidissement alimentée, laquelle pourra être utilisée pour l'utilisation du bord et des passagers et une condensation de l'eau du circuit principal.

13. Installation selon la revendication 12, **caractérisée en ce que** l'eau du circuit principal passe alors dans une pompe (23) alimenté en électricité qui augmente la pression du liquide, après quoi ce liquide recommence le même cycle pour la récupération de la chaleur en provenance de la pile (1).

14. Installation selon l'une quelconque des revendication 9 à 13, **caractérisée en ce que** les gaz d'échappement de la pile (1) après le passage dans le premier échangeur de chaleur (19) sont évacués vers une pompe à chaleur (27) qui génère le système d'air conditionné (D) et/ou d'eau sanitaire.

15. Installation selon l'une quelconque des revendications 1 à 14, **caractérisée en ce qu'**elle comporte un ou généralement plusieurs moteurs diesel (29) facultatifs qui entraînent des génératrices-alternatrices (31) qui fournissent l'électricité au moteur électrique (17).

16. Installation selon la revendication 15, **caractérisée en ce que** les gaz d'échappement du ou des moteurs (29) sont récupérés pour être utilisés dans un système avec un second échangeur de chaleur (21) identique à celui introduit pour collecter les gaz provenant de la pile à combustible (1) ou être intégrés dans le même circuit hydraulique que celui de la pile, mais fonctionnant alors via un évaporateur différent de celui utilisé pour les gaz en provenance de la pile (1).

17. Installation selon la revendication 16, **caractérisée en ce que** les gaz produits à la sortie du second échangeur de chaleur (21) sont fournis à la pompe à chaleur (27).

18. Installation selon l'une quelconque des revendications 1 à 17, **caractérisée en ce que** la propulsion peut se faire à partir d'un système hybride composé de la pile à combustible (1) et du ou des moteurs diesels (29) ou à partir d'une propulsion principalement basée sur une ou des piles à combustible sans présence de moteur diesel.
